# EUROPEAN PATENT APPLICATION

(11) **EP 4 679 348 A1**
(43) Date of publication of application: **14.01.2026**
(21) Application number: 24769890.5
(22) Date of filing: 08.03.2024
(51) Int. Cl.: G06Q 30/0207

(54) **VIRTUAL RESOURCE PROCESSING METHOD AND APPARATUS, DEVICE, STORAGE MEDIUM, AND PROGRAM PRODUCT**

(30) Priority: 10.03.2023 CN 202310263520
(71) Applicant: Beijing Zitiao Network Technology Co., Ltd., Beijing 100190 (CN)
(72) Inventor: WANG, Wenyu, Beijing 100028 (CN)
(74) Representative: Grünecker Patent- und Rechtsanwälte PartG mbB
(86) International application number: PCT/CN2024/080871
(87) International publication number: WO 2024/188197

(57) **Abstract**

The disclosure relates to a method, apparatus, device, storage medium and program product for processing virtual resources. The method includes: in response to receiving a trigger operation from a first user, displaying a virtual resource display page; displaying, in the virtual resource display page, a resource identifier corresponding to at least one virtual resource to be taken, the virtual resource to be taken comprising a virtual resource generated based on the first user and a second user completing a preset interactive operation; in response to receiving a trigger operation for the resource identifier, transferring the virtual resource to be taken to the first user.

## Description

This application claims priority to Chinese Patent Application No. 202310263520.0, filed on March 10, 2023, and entitled "Method, Apparatus, Device, Storage Medium, and Program Product for Processing Virtual Resources," the entire contents of which are incorporated herein by reference.

### FIELD

The present disclosure relates to the field of computer processing technology, and more particularly, to a method, apparatus, device, storage medium, and program product for processing virtual resources.

### BACKGROUND

With the continuous development of Internet technology, many applications have emerged. Currently, many applications use a common method of distributing virtual resources to users to attract more users, and users may use these virtual resources to interact within the applications.

### SUMMARY

Embodiments of the present disclosure provide a method, apparatus, device, storage medium, and program product for processing virtual resources, and provide a way for interacting with virtual resources.

In a first aspect, embodiments of the present disclosure provide a method of processing virtual resources, comprising:
in response to receiving a trigger operation from a first user, displaying a virtual resource display page;
displaying, in the virtual resource display page, a resource identifier corresponding to at least one virtual resource to be taken, the virtual resource to be taken comprising a virtual resource generated based on the first user and a second user completing a preset interactive operation;
in response to receiving a trigger operation for the resource identifier, transferring the virtual resource to be taken to the first user.

In a second aspect, embodiments of the present disclosure provide an apparatus for processing virtual resources, comprising:
a virtual resource display page display module configured to display a virtual resource display page in response to receiving a trigger operation from a first user;
a resource identifier display module configured to display, in the virtual resource display page, at least one resource identifier corresponding to at least one virtual resource to be taken, the virtual resource to be taken comprising a virtual resource generated based on the first user and a second user completing a preset interactive operation;
a virtual resource transfer module configured to transfer the virtual resource to be taken to the first user in response to receiving a trigger operation for the resource identifier.

In a third aspect, embodiments of the present disclosure provide an electronic device, comprising:
one or more processors;
a storage device for storing one or more programs;
the one or more programs upon execution by the one or more processors, causing the one or more processors to implement the method for processing virtual resources according to any one of the first aspect above.

In a fourth aspect, embodiments of the present disclosure provide a computer-readable storage medium thereon storing a computer program, the computer program being executable by a processor to implement the method for processing virtual resources according to any one of the first aspect above.

In a fifth aspect, embodiments of the present disclosure provide a computer program product. The computer program product comprising computer program or instructions, the computer program or instructions upon execution by a processor, causing the processor to implement the method for processing virtual resources according to the first aspect of the present disclosure.

Embodiments of the present disclosure provide a method, apparatus, device, storage medium and program product for processing virtual resources. The method includes: in response to receiving a trigger operation from a first user, displaying a virtual resource display page; displaying on the virtual resource display page at least one resource identifier corresponding to an unclaimed virtual resource, the unclaimed virtual resource including a virtual resource generated based on the first user and a second user completing a preset interactive operation; and in response to receiving a trigger operation for the resource identifier, transferring the unclaimed virtual resource to the first user. In the technical solution of the embodiments of the present disclosure, firstly, in response to receiving a trigger operation from a first user, a resource identifier corresponding to the unclaimed virtual resource is displayed on a virtual resource display page, and then, based on the resource identifier corresponding to the unclaimed virtual resource, the unclaimed virtual resource is transferred to the first user, thereby providing a way of interaction with virtual resources.

### BRIEF DESCRIPTION OF THE DRAWINGS

The foregoing and other features, aspects, and advantages of the present disclosure will become more apparent from the following detailed description when taken in conjunction with the accompanying drawings, wherein like reference numerals designate like or corresponding parts throughout the several views. It is to be understood that the drawings are diagrammatic and not necessarily drawn to scale.
FIG. 1 illustrates an architectural diagram of a virtual resource processing scenario according to an embodiment of the present disclosure;
FIG. 2 is a flowchart of a method for processing virtual resources according to an embodiment of the present disclosure;
FIG. 3 is a schematic diagram of a resource display page according to an embodiment of the present disclosure;
FIG. 4 is a structural diagram of an apparatus for processing virtual resources according to an embodiment of the present disclosure;
FIG. 5 is a structural diagram of an electronic device according to an embodiment of the present disclosure.

### DETAILED DESCRIPTION

The following describes embodiments of the present disclosure in greater detail with reference to the accompanying drawings. Although the drawings depict certain embodiments, it should be understood that the present disclosure may be embodied in various forms and should not be construed as limited to the embodiments set forth herein; rather, these embodiments are provided so that this disclosure will be thorough and complete, and will fully convey the scope of the disclosure to those skilled in the art. It should be understood that the accompanying drawings and embodiments are for illustrative purposes only and are not intended to limit the scope of the present disclosure.

It should be understood that the various steps described in the method embodiments of the present disclosure may be executed in different orders and/or concurrently. Furthermore, the method embodiments may include additional steps and/or omit execution of the illustrated steps. The scope of the present disclosure is not limited in this regard.

As used herein, the term "comprising" and its variations are intended to be open-ended, that is, to mean "including, but not limited to." The term "based on" means "at least partially based on." The term "one embodiment" means "at least one embodiment"; the term "another embodiment means "at least one other embodiment"; and the term "some embodiments" means "at least some embodiments." Definitions of other terms will be provided in the description below.

It should be noted that the terms "first," "second," etc. used in the present disclosure are only used to distinguish different devices, modules, or units, and are not intended to limit the order or interdependency of the functions performed by these devices, modules, or units.

It should be noted that the modifiers "a," "an," and "plural" are illustrative and not limiting, and those skilled in the art should understand that unless explicitly stated otherwise in the context, they should be understood as "one or more."

The names of the messages or information exchanged between multiple devices in the embodiments of the present disclosure are for illustrative purposes only and are not intended to limit the scope of such messages or information.

Before further detailing the embodiments of the present disclosure, the terms used in the embodiments of the present disclosure are explained, and the terms used in the embodiments of the present disclosure are applicable to the following explanations.

"In response to" is used to indicate the conditions or states on which the performed operation depends. When the dependent conditions or states are met, the one or more operations performed may be real-time or have a set delay. Unless otherwise specified, there is no restriction on the order of execution of multiple operations.

It should be understood that, before using the technical solutions disclosed in the embodiments of the present disclosure, the type, scope of use, and usage scenarios of the personal information involved in the present disclosure should be notified to the user and authorized by the user in an appropriate manner in accordance with relevant laws and regulations.

For example, in response to receiving an active request from the user, a prompt message is sent to the user to explicitly inform the user that the operation requested to be performed will require obtaining and using the user's personal information. This allows the user to independently choose whether to provide personal information to the electronic device, application, server, or storage medium, etc., software or hardware, that performs the operations of the present disclosure's technical solution, based on the prompt information.

As an optional but non-limiting implementation, the method of sending a prompt message to the user in response to receiving an active request from the user may be, for example, in the form of a pop-up window, in which the prompt information may be presented in text. In addition, the pop-up window may also carry selection controls for the user to choose "agree" or "disagree" to provide personal information to the electronic device.

It should be understood that the notification and user authorization process described above are only illustrative and do not limit the implementations of the present disclosure. Other methods that meet the requirements of relevant laws and regulations may also be applied to the implementations of the present disclosure.

It should be understood that the data involved in this technical solution (including but not limited to the data itself, the acquisition or use of the data) should comply with the requirements of corresponding laws, regulations, and relevant provisions.

With the continuous development of Internet technology, many applications have emerged. Currently, many applications commonly issue virtual resources to users to attract more users. Users may use these virtual resources to interact within the applications.

Herein, virtual resources refer to resources used to achieve interaction and may include a variety of resources, such as one or more of game props and game skins in games, as well as various virtual gifts, red packets, etc. It should be noted that the form or name of virtual resources is not specifically limited.

In related technologies, virtual resources are issued to users after they complete set tasks. The set tasks may include watching videos, watching advertisements, signing in, etc. For example, a user watches a video for 15 seconds and some virtual resources are issued to the user's corresponding account.

To further enhance the user experience, the present disclosure provides a virtual resource processing method comprising: in response to receiving a trigger operation from a first user, displaying a virtual resource display page; displaying, in the virtual resource display page, a resource identifier corresponding to at least one virtual resource to be taken, the virtual resource to be taken comprising a virtual resource generated based on the first user and a second user completing a preset interactive operation; in response to receiving a trigger operation for the resource identifier, transferring the virtual resource to be taken to the first user..

The technical solution of this embodiment first displays, in response to receiving a trigger operation from a first user, the resource identifiers corresponding to the unclaimed virtual resources on the virtual resource display page, and then, based on the resource identifiers corresponding to the unclaimed virtual resources, transfers the unclaimed virtual resources to the first user, providing a method of interaction for virtual resources.

The following describes the virtual resource processing method provided in the embodiments of the present disclosure in detail in conjunction with the embodiments and drawings.

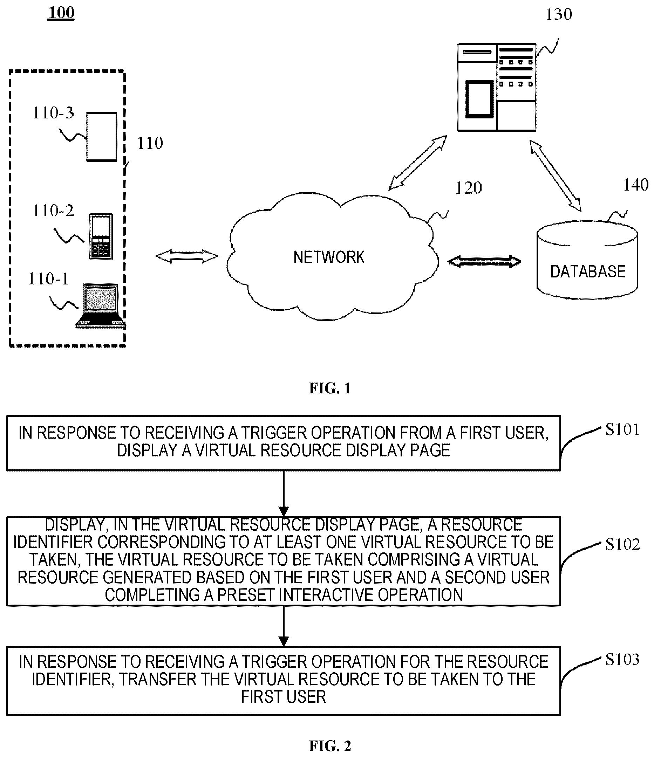

FIG. 1 is a schematic diagram of a system that may be used to implement the virtual resource processing provided in the embodiments of the present disclosure. As shown in FIG. 1, the system 100 may include a plurality of user terminals 110, a network 120, a server 130, and a database 140. For example, the system 100 may be used to implement the virtual resource processing method described in any embodiment of the present disclosure.

It is understood that the user terminal 110 may be any other type of electronic device capable of performing data processing, including but not limited to: mobile phones, stations, units, devices, multimedia computers, multimedia tablets, Internet nodes, communicators, desktop computers, laptop computers, notebook computers, netbook computers, tablet computers, personal communication system (PCS) devices, personal navigation devices, personal digital assistants (PDA), audio/video players, digital cameras/video cameras, positioning devices, television receivers, radio receivers, e-book devices, game devices, or any combination thereof, including accessories and peripherals of these devices or any combination thereof.

Users may operate through applications installed on the user terminal 110. The application transmits user behavior data to the server 130 through the network 120, and the user terminal 110 may also receive data transmitted by the server 130 through the network 120. The embodiments of the present disclosure do not limit the hardware and software systems of the user terminal 110. For example, the user terminal 110 may be based on processors such as ARM, X86, may have input/output devices such as cameras, touch screens, and microphones, and may run operating systems such as Windows, iOS, Linux, Android, and HarmonyOS.

Users may record and post videos, write and post works on the user terminal 110 through applications, etc. They may also watch or browse videos post by other users, and perform operations such as liking, commenting, and forwarding. Further, they may obtain virtual resources after completing designated tasks.

The user terminal 110 may implement the related information display method provided in the embodiments of the present disclosure by running processes or threads. In some examples, the user terminal 110 may execute the virtual resource processing method using its built-in applications. In other examples, the user terminal 110 may execute the virtual resource processing method by calling applications stored externally to the user terminal 110.

The network 120 may be a single network, or a combination of at least two different networks. For example, the network 120 may include, but is not limited to, a combination of one or more of a local area network (LAN), a wide area network (WAN), a public network, and a private network. The network 120 may be a computer network such as the Internet and/or various telecommunication networks (e.g., 3G/4G/5G mobile communication networks, Wi-Fi, Bluetooth, ZigBee, etc.), and the embodiments of the present disclosure are not limited in this regard.

The server 130 may be a single server, a server group, or a cloud server, and each server within the server group is connected via a wired or wireless network. A server group may be centralized, such as a data center, or distributed. The server 130 may be local or remote. The server 130 may communicate with the user terminal 110 via a wired or wireless network. The embodiments of the present disclosure do not impose limitations on the hardware and software systems of the server 130.

The database 140 may generally refer to a device having a storage function. The database 140 is mainly used to store various data used, generated, and output by the user terminal 110 and the server 130 during operation. For example, taking the application on the user terminal 110 as an example, the data stored by the database 140 may include resource data such as video and audio uploaded by the user through the user terminal 110, interaction operation data such as likes and comments, and virtual resource data.

The database 140 may be local or remote. The database 140 may include various storage devices, such as random access memory (RAM) and read-only memory (ROM). The storage devices mentioned above are merely examples, and the storage devices that the system 100 may use are not limited thereto. The embodiments of the present disclosure do not impose limitations on the hardware and software systems of the database 140. For example, the database 140 may be a relational database or a non-relational database.

The database 140 may be connected to or communicate with the server 130 or a part thereof via the network 120, may be directly connected to or communicate with the server 130, or may be a combination of the above two methods.

In some examples, the database 140 may be a stand-alone device. In other examples, the database 140 may also be integrated into at least one of the user terminal 110 and the server 130. For example, the database 140 may be located on the user terminal 110 or on the server 130. In another example, the database 140 may also be distributed, with a portion located on the user terminal 110 and another portion located on the server 130.

FIG. 2 is a flowchart of a method for processing virtual resources according to an embodiment of the present disclosure. This embodiment is applicable to scenarios where virtual resources are acquired. The method may be performed by a virtual resource processing apparatus, which may be implemented by software and/or hardware. The virtual resource processing method may be performed by the user terminal 110 shown in FIG. 1.

As shown in FIG. 2, the virtual resource processing method provided by the present embodiment mainly includes steps S101-S103.

S101: Displaying a virtual resource display page in response to receiving a trigger operation from a first user.

In some embodiments, the first user refers to a user who may obtain virtual resources after performing an interactive operation. The first user may also initiate an interactive operation with a second user to prompt the second user to complete the interactive operation. After the second user completes the interactive operation, the first user receives the virtual resources.

In one embodiment of the present disclosure, the application's home page is displayed in response to receiving a user's operation to open the application.

In one embodiment of the present disclosure, a virtual resource entry control is set on the application page. Accordingly, responding to a trigger operation received from the first user includes responding to the first user's trigger operation on the virtual resource entry control. The location of the virtual resource entry control may be set according to the actual situation and is not specifically limited in this embodiment.

In one embodiment of the present disclosure, responding to receiving a trigger operation from the first user includes: responding to a sliding operation performed at a preset location on the application page. For example, a downward sliding operation performed at the top of the application's home page.

In one embodiment of the present disclosure, the virtual resource display page may occupy the entire display page of the application, or it may be a panel area or an overlay area within the application page. The specific form of the virtual resource display page is not specifically limited in this embodiment.

S102: Displaying, in the virtual resource display page, a re-source identifier corresponding to at least one virtual resource to be taken, the virtual resource to be taken comprising a virtual resource generated based on the first user and a second user completing a preset inter-active operation.

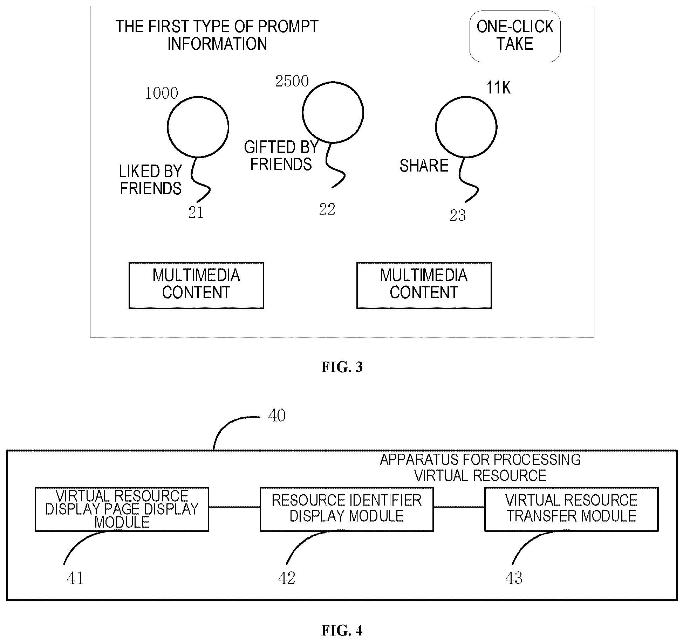

In this embodiment, unclaimed virtual resources may be understood as virtual resources that the first user has earned by completing specified tasks, but have not yet been transferred to the first user. These virtual resources may only be transferred to the first user after the first user performs a claim operation. A resource identifier is an indicator on the virtual resource display page that signifies the presence of unclaimed virtual resources for the first user. The resource identifier may be in the form of a bubble, etc., and the style of the resource identifier is not specifically limited in this embodiment. As shown in FIG. 3, the resource identifier is represented as a bubble in this embodiment.

In one embodiment of the present disclosure, the first and second users complete the preset interactive operation under the condition that a preset association exists between them. For example, the first and second users are mutually following friends. This facilitates interaction between the accounts of the first and second users.

In one embodiment, the first user and the second user complete the preset interactive operation, which includes interactive operations initiated by the first user to the second user and/or interactive operations initiated by the second user to the first user.

In one embodiment, the interactive operation initiated by the first user to the second user may be the sharing of media content by the first user to the second user. The media content may be media content post by the first user or public media content already post on the platform. In some embodiments, the media content may be any one or more of videos, text, images, live streams, etc.

In one embodiment, the interactive operation initiated by the second user to the first user may be an interaction by the second user with media content post by the first user, such as liking, viewing, or commenting.

In this embodiment, virtual resources may be obtained based on interactive operations initiated by the first user to the second user, or based on interactive operations initiated by the second user to the first user. This allows virtual resources to be obtained through effective interactions between users, thus enhancing interactivity.

In one embodiment, the interactive operation initiated by the first user to the second user includes the first user initiating an interactive operation to the second user based on target media content post by the first user.

In some embodiments, the target media content is media content that the first user has publicly post on the platform and has selected to share with the second user. The process of the first user initiating an interactive operation to the second user based on the target media content post by the first user includes: in response to the first user selecting the target media content, determining the target media content to be shared; and in response to receiving the share operation for the target media content, sharing the target media content to the second user. In some embodiments, the share operation for the target media content may be a trigger operation on a share control in the target media content display page.

In one embodiment, the interactive operation initiated by the second user to the first user includes at least one of: the second user initiating an interactive operation to the first user based on the target media content post by the first user; and the second user initiating a virtual resource transfer operation to the first user.

The interactive operation initiated by the second user to the first user based on the target media content post by the first user may include interactions such as liking, viewing, and commenting on the target media content post by the first user on the platform.

In this embodiment, after the second user interacts with the media content post by the first user by liking, commenting, etc., the platform issues unclaimed virtual resources to the first user, or the second user transfers virtual resources to the first user. It is understood that after the virtual resources are transferred to the first user, the first user will see the unclaimed virtual resources. This enhances the interaction between the first and second users.

In one embodiment, the quantity of virtual resources generated based on the first and second users completing a preset interactive operation may be designed based on the specific circumstances. Specifically, for interactive operations initiated by the first user to the second user, the platform directly distributes virtual resources. A set amount of virtual resources is obtained upon completing one interactive operation. After the number of interactive operations reaches a limit, virtual resources are no longer distributed. Interactive operations initiated by the second user to the first user may result in tiered virtual resources, where each tier adds to the previous amount.

In one embodiment, the number of resource identifiers displayed on the virtual resource display page is determined by the categories of completed interactive operations. Alternatively, the number of resource identifiers displayed on the virtual resource display page is determined by the number of completed interactive operations.

In one embodiment, the categories of interactive operations may be divided into two categories. One is the interactive operation initiated by the first user to the second user, for example, sharing. The other is the interactive operation initiated by the second user to the first user, such as liking, commenting, browsing, and transferring virtual resources.

In one embodiment, the categories of interactive operations may also be further subdivided into multiple categories, for example, sharing, liking, commenting, browsing, and transferring virtual resources may be five categories of interactive operations. The classification method of interactive operation categories is not specifically limited in this embodiment.

In this embodiment, the number of resource identifiers displayed on the virtual resource display page corresponds to the number of categories of interactive operations associated with the unclaimed virtual resources.

In one embodiment, the number of resource identifiers displayed on the virtual resource display page corresponds to the number of completed interactive operations associated with the unclaimed virtual resources. For example, if 3 share operations are completed, 3 resource identifiers are displayed on the virtual resource display page. If 2 likes and 4 comments are received, 6 resource identifiers are displayed on the virtual resource display page.

In one embodiment, the quantity of resources corresponding to the resource identifier and the category of interactive operation corresponding to the resource identifier are displayed on the virtual resource display page.

As shown in FIG. 3, the quantity of resources corresponding to the resource identifier and the category of interactive operation corresponding to the resource identifier are displayed at the location corresponding to the resource identifier. For example, the resource identifier 11 displays within a set area the interactive operation category as "Friend Like" and the resource quantity as 1000. The resource identifier 12 displays the interactive operation category as "Friend Gift" and the resource quantity as 2500. The resource identifier 13 displays the interactive operation category as "Share" and the resource quantity as 11,000.

In this embodiment, if there are newly added unclaimed virtual resources, they are directly added to the quantity of resources corresponding to the resource identifier. For example, if the category of interactive operation for the newly added unclaimed virtual resource is "Friend Gift" and the quantity is 500, then 500 is added to the resource quantity corresponding to the "Friend Gift" category. That is, the resource quantity corresponding to the "Friend Gift" category becomes 3000.

In this embodiment, by displaying the quantity of resources and the category of interactive operations within a preset area of the resource identifier, the user may intuitively see the values corresponding to various interactive operations.

In one embodiment, when the number of resource identifiers is greater than a preset number, in response to a sliding operation on the virtual resource display page, the movement and display of the resource identifiers on the virtual resource display page are controlled.

In this embodiment, due to the limitations of the electronic device's interface, the number of resource identifiers displayed on the virtual resource display page is also limited. In this embodiment, when the number of resource identifiers corresponding to unclaimed virtual resources is greater than a preset number, in response to receiving a user's sliding operation on the virtual resource display page, the movement and display of the resource identifiers on the virtual resource display page are controlled so as to display more resource identifiers within the limited display area.

In some embodiments, the sliding operation on the virtual resource display page may be a sliding operation within the resource identifier display area. Specifically, when the user performs a leftward sliding operation, the resource identifiers move and are displayed to the left; when the user performs a rightward sliding operation, the resource identifiers move and are displayed to the right.

In one embodiment, a first type of prompt information is displayed on the virtual resource display page. In some embodiments, the first type of prompt information is used to instruct the first user to perform a claim operation on the unclaimed virtual resources.

In one embodiment, as shown in FIG. 3, the first type of prompt information is displayed at the top of the virtual resource page. The first type of prompt information is used to instruct the first user to perform a claim operation on the unclaimed virtual resources. In some embodiments, the first type of prompt information may be general prompt information about the virtual resources, for example, "You have XX unclaimed virtual resources." Further, the first type of prompt information may also be information displayed after classifying the unclaimed virtual resources. For example, "XXXX gifted by friends" and "YYYY earned through interactions."

In one embodiment, when the number of the first type of prompt information is plural, the display order of the first type of prompt information on the virtual resource display page is determined by the priority corresponding to the first type of prompt information.

In this embodiment, when there are multiple first type prompt messages, they are displayed according to their priority, with higher priority messages displayed first and lower priority messages displayed later. In some embodiments, the priority corresponding to the first type of prompt information may be preset, and is not specifically limited in this embodiment.

A second type of prompt information is displayed on the virtual resource display page. In some embodiments, the second type of prompt information is used to indicate interactive operations that may be performed between the first user and the second user, as well as the virtual resources that may be obtained after completing the interactive operations.

In this embodiment, when there are multiple second type prompt messages, they are displayed in a carousel on the virtual resource display page. When multiple second type prompt messages are displayed in a carousel, they are rotated according to their priority. Each message is displayed for 10 seconds, and after the last message is displayed for 10 seconds, the carousel starts again from the first message, continuously cycling.

In one embodiment, the second type prompt message is displayed when the first type prompt message is present. The second type prompt message may be "Collect x likes to get z virtual resources," "Share video with friends to get x virtual resources," or "Get z virtual resources for x views on your work." This embodiment only provides illustrative examples of the second type prompt message.

In one embodiment, as shown in FIG. 3, the target multimedia content post by the first user is displayed on the virtual resource display page, and in response to a share operation for the target multimedia content, the target multimedia content is shared with the second user.

In this embodiment, when the quantity of the target multimedia content is greater than a preset quantity, in response to a sliding operation on the virtual resource display page, the movement and display of the target multimedia content on the virtual resource display page are controlled.

S103: In response to receiving a trigger operation for the resource identifier, transferring the virtual resource to be taken to the first user.

In this embodiment, in response to receiving a trigger operation for the resource identifier, the unclaimed virtual resources corresponding to the resource identifier are transferred to the first user. As shown in FIG. 3, in response to the trigger operation for resource identifier 11, a resource quantity of 1000 is transferred to the first user; in response to the trigger operation for resource identifier 12, a resource quantity of 2500 is transferred to the first user; and in response to the trigger operation for resource identifier 13, a resource quantity of 11,000 is transferred to the first user.

In one embodiment, a one-click claim control is displayed on the virtual resource display page; in response to a trigger operation for the one-click claim control, all unclaimed virtual resources are transferred to the first user.

In this embodiment, as shown in FIG. 3, a one-click claim control is displayed on the virtual resource display page, and in response to receiving a trigger operation for the one-click claim control, all unclaimed virtual resources are transferred to the first user. In some embodiments, the one-click claim control may not be displayed when there are no unclaimed virtual resources.

This embodiment provides a solution for quickly claiming virtual resources, improving the claiming speed.

In this embodiment, the virtual resources transferred to the first user are no longer stored by category but are stored cumulatively.

In one embodiment, in response to receiving a trigger operation for the resource identifier, a preset dynamic effect is displayed on the virtual resource display page.

In this embodiment, the preset dynamic effect may be set according to the actual situation. For example, the dynamic effect may be a bursting balloon or a flying balloon. The preset dynamic effect may be set based on actual needs and is not specifically limited in this embodiment.

In one embodiment, in response to the trigger operation for the resource identifier, the corresponding resource identifier displays the preset dynamic effect.

In one embodiment, in response to the trigger operation for the one-click claim control, all resource identifiers display the preset dynamic effect simultaneously or sequentially.

In one embodiment, if no claim operation for the unclaimed virtual resource is detected within a preset duration, the resource identifier corresponding to the unclaimed virtual resource is no longer displayed on the virtual resource display page.

In this embodiment, if the first user does not claim the virtual resource within the preset duration, the corresponding virtual identifier is no longer displayed. Specifically, if the unclaimed virtual resources were obtained through a virtual resource transfer operation initiated by the second user to the first user, the unclaimed virtual resources are returned to the second user. If the unclaimed virtual resources were obtained through an interactive operation initiated by the first user to the second user based on target media content post by the first user, or an interactive operation initiated by the second user to the first user based on target media content post by the first user, then the unclaimed virtual resources are hidden and may no longer be claimed.

This embodiment provides a virtual resource processing method, apparatus, device, storage medium, and program product. The method includes: displaying a virtual resource display page in response to receiving a trigger operation from a first user; displaying at least one resource identifier corresponding to at least one unclaimed virtual resource on the virtual resource display page, where the unclaimed virtual resource includes a virtual resource generated based on the first user and a second user completing a preset interactive operation; and transferring the unclaimed virtual resource to the first user in response to receiving a trigger operation for the resource identifier. This embodiment's technical solution first displays the resource identifier corresponding to the unclaimed virtual resource on the virtual resource display page in response to receiving the trigger operation from the first user, and then transfers the unclaimed virtual resource to the first user based on the resource identifier, thus providing a method of interaction for virtual resources.

FIG. 4 is a structural diagram of a virtual resource processing apparatus according to an embodiment of the present disclosure. This embodiment is applicable to the scenario of obtaining virtual resources. The virtual resource processing apparatus may be implemented in software and/or hardware. The virtual resource processing apparatus may be configured in the user terminal 110 described in FIG. 1.

As shown in FIG. 4, the virtual resource processing apparatus provided in this embodiment mainly includes a virtual resource display page display module 41, a resource identifier display module 42, and a virtual resource transfer module 43.

The virtual resource display page display module 41 is configured to display a virtual resource display page in response to receiving a trigger operation from a first user.

The resource identifier display module 42 is configured to display, in the virtual resource display page, at least one resource identifier corresponding to at least one virtual resource to be taken, the virtual resource to be taken comprising a virtual resource generated based on the first user and a second user completing a preset interactive operation.

The virtual resource transfer module 43 is configured to transfer the virtual resource to be taken to the first user in response to receiving a trigger operation for the resource identifier.

In one embodiment of the present disclosure, the first user and the second user completing the preset interactive operation comprises an interactive operation initiated by the first user to the second user and/or an interactive operation initiated by the second user to the first user.

In one embodiment of the present disclosure, the interactive operation initiated by the first user to the second user comprises an interactive operation initiated by the first user to the second user based on target media content posted by the first user, and/or the interactive operation initiated by the second user to the first user comprises at least one of: an interactive operation initiated by the second user to the first user based on target media content posted by the first user, a virtual resource transfer operation initiated by the second user to the first user.

In one embodiment of the present disclosure, the number of resource identifiers displayed in the virtual resource display page is determined by categories of completed interactive operations, or the number of resource identifiers displayed in the virtual resource display page is determined by the number of completed interactive operations.

In one embodiment, the resource identifier display module 42 is further configured to display, in the virtual resource display page, a resource amount corresponding to the resource identifier and a category of interactive operation corresponding to the resource identifier.

In one embodiment, the apparatus further includes a control display module, configured to display a one-click taking control in the virtual resource display page; the virtual resource transfer module 43 is further configured to, in response to receiving a trigger operation for the one-click taking control, transfer all the virtual resources to be taken to the first user er.

In one embodiment, the apparatus further includes a movement display module configured to, in response to the number of resource identifiers being greater than a preset number, in response to a sliding operation on the virtual resource display page, control a mobile display of the resource identifiers in the virtual resource display page.

In one embodiment, the apparatus further includes a first type prompt information display module configured to displaying a first type of prompt information in the virtual resource display page, wherein the first type of prompt information is used to indicate the first user to perform a taking operation on the virtual resources to be taken.

In one embodiment, in response to the number of the first type of prompt information being multiple, a display order of the first type of prompt information in the virtual resource display page is determined by priority corresponding to the first type of prompt information.

In one embodiment, the apparatus further includes a second type prompt information display module configured to display a second type of prompt information on the virtual resource display page. The second type of prompt information is used to indicate an interactive operation capable to be performed between the first user and the second user and virtual resources obtained after completing the interactive operation..

In one embodiment, the apparatus further includes a dynamic effect display module configured to ,in response to receiving a trigger operation for the resource identifier, display a preset dynamic effect in the virtual resource display page.

In one embodiment, the resource identifier display module 42 is further configured to, in response to no taking operation for the virtual resource to be taken being detected within a preset duration, control the resource identifier corresponding to the virtual resource to be taken to no longer be displayed in the virtual resource display page.

The virtual resource processing apparatus provided by the present disclosure may perform the same functions as those achieved by the virtual resource processing method described above in the method embodiments of the present disclosure. Repetition of detailed steps and beneficial effects is omitted here for conciseness.

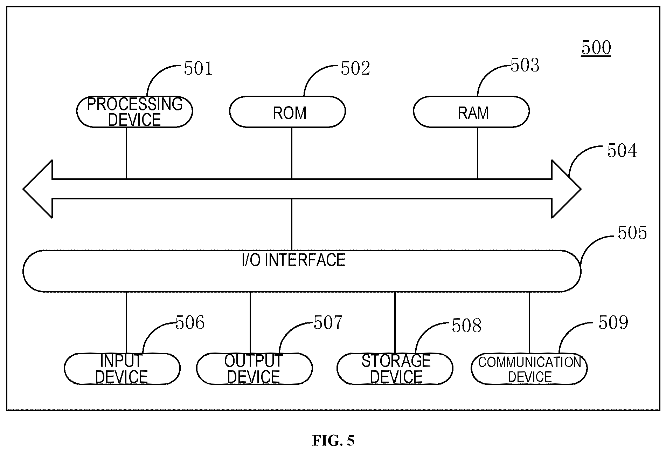

FIG. 5 is a schematic structural diagram of an electronic device according to an embodiment of the present disclosure. Referring now to FIG. 5, it illustrates an electronic device 500 suitable for implementing the present disclosure. The electronic device 500 in this embodiment may include but is not limited to mobile terminals such as mobile phones, laptop computers, digital broadcast receivers, PDAs (Personal Digital Assistants), PADs (tablet computers), PMPs (Portable Multimedia Players), in-vehicle terminals (such as in-vehicle navigation terminals), wearable terminal devices, and the like, as well as fixed terminals such as digital TVs, desktop computers, smart home devices, and the like. The electronic device shown in FIG. 5 is merely an example and should not impose any limitations on the functions and scope of use of the present disclosure.

As shown in FIG. 5, the electronic device 500 may include a processing unit (e.g., a central processing unit, graphics processing unit, etc.) 501, which may perform various appropriate actions and processing according to programs stored in read-only memory (ROM) 502 or programs loaded from a storage device 508 into random access memory (RAM) 503 to implement the virtual resource processing methods of the embodiments described in this disclosure. Various programs and data required for the operation of the terminal device 500 are also stored in the RAM 503. The processing unit 501, ROM 502, and RAM 503 are interconnected via a bus 504. An input/output (I/O) interface 505 is also connected to the bus 504.

Typically, the following devices may be connected to the I/O interface 505: input devices 506, including, for example, a touch screen, touchpad, keyboard, mouse, camera, microphone, accelerometer, gyroscope, etc.; output devices 507, including, for example, a liquid crystal display (LCD), speakers, vibrator, etc.; storage devices 508, including, for example, magnetic tapes, hard disks, etc.; and a communication device 509. The communication device 509 may allow the terminal device 500 to communicate wirelessly or wiredly with other devices to exchange data. Although FIG. 5 shows a terminal device 500 with various devices, it should be understood that it is not required to implement or have all the shown devices. Alternatively, more or fewer devices may be implemented or included.

Specifically, according to embodiments of the present disclosure, the process described above with reference to the flowchart may be implemented as a computer software program. For example, embodiments of the present disclosure include a computer program product comprising a computer program carried on a non-transitory computer readable medium. This computer program includes program code for executing the method shown in the flowchart, thereby implementing the virtual resource processing method as described above. In such an embodiment, the computer program may be downloaded and installed from a network via the communication device 509, installed from the storage device 508, or installed from the ROM 502. When the computer program is executed by the processing unit 501, the functions defined in the method of this embodiment are performed.

"It should be noted that the computer-readable medium described above may be a computer-readable signal medium, a computer-readable storage medium, or any combination thereof. Computer-readable storage media may be, for example, but are not limited to, electrical, magnetic, optical, electromagnetic, infrared, or semiconductor systems, apparatuses, or devices, or any combination thereof. More specific examples of computer-readable storage media may include, but are not limited to: electrical connections with one or more conductors, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof. In the present disclosure, a computer-readable storage medium may be any tangible medium that contains or stores a program that may be used or in combination with an instruction execution system, apparatus, or device. In the present disclosure, a computer-readable signal medium may include a data signal propagated in a baseband or as part of a carrier wave, carrying computer-readable program code. Such a propagated data signal may take many forms, including but not limited to electromagnetic signals, optical signals, or any suitable combination thereof. A computer-readable signal medium may also be any computer-readable medium other than a computer-readable storage medium, and this computer-readable signal medium may send, propagate, or transmit a program for use by or in combination with an instruction execution system, apparatus, or device. The program code contained on the computer-readable medium may be transmitted using any suitable medium, including but not limited to: wires, optical cables, RF (radio frequency), etc., or any suitable combination thereof.

In some embodiments, clients and servers may communicate using any currently known or future developed network protocols such as HTTP (HyperText Transfer Protocol), and may be interconnected with digital data communications of any form or medium (e.g., a communication network). Examples of communication networks include local area networks ("LANs"), wide area networks ("WANs"), internetworks (e.g., the Internet), and peer-to-peer networks (e.g., ad hoc peer-to-peer networks), as well as any currently known or future developed networks.

The computer-readable medium described above may be included in the electronic device described above; or it may exist separately and not be assembled into the electronic device.

The computer-readable medium described above carries one or more programs. When the one or more programs are executed by the terminal device, the terminal device performs the following operations: in response to receiving a trigger operation from a first user, displays a virtual resource display page; displays at least one resource identifier corresponding to at least one unclaimed virtual resource on the virtual resource display page, where the unclaimed virtual resource includes a virtual resource generated based on the first user and a second user completing a preset interactive operation; and transfers the unclaimed virtual resource to the first user in response to receiving a trigger operation for the resource identifier.

Optionally, when the one or more programs are executed by the terminal device, the terminal device may also execute other steps described in the above embodiments.

"The computer program code for performing the operations of the present disclosure may be written in one or more programming languages or a combination thereof. These programming languages include, but are not limited to, object-oriented programming languages such as Java, Smalltalk, and C++, and conventional procedural programming languages such as the "C" language or similar programming languages. The program code may be executed entirely on a user computer, partially on a user computer, as a stand-alone software package, partly on a user computer and partly on a remote computer, or entirely on a remote computer or server. In cases involving a remote computer, the remote computer may be connected to the user computer via any type of network-including a local area network (LAN) or a wide area network (WAN)-or may be connected to an external computer (e.g., using an Internet service provider to connect via the Internet).

The flowcharts and block diagrams in the drawings illustrate the possible implementations of the system architecture, functions, and operations of a system, method, and computer program product according to various embodiments of the present disclosure. In this regard, each block in the flowchart or block diagram may represent a module, a segment of a program, or a portion of code, which includes one or more executable instructions for implementing a specified logical function. It should also be noted that, in some alternative implementations, the functions indicated in the blocks may occur in an order different from that indicated in the drawings. For example, two blocks shown in succession may actually be executed substantially concurrently, or they may sometimes be executed in the reverse order, depending on the functions involved. It should also be noted that each block in the block diagram and/or flowchart, and combinations of blocks in the block diagram and/or flowchart, may be implemented using a dedicated hardware-based system that performs the specified functions or operations, or may be implemented using a combination of dedicated hardware and computer instructions.

The units described in the embodiments of the present disclosure may be implemented in software or hardware. In some cases, the names of the units do not constitute a limitation on the units themselves.

The functions described above may be performed at least in part by one or more hardware logic components. By way of non-limiting example, illustrative types of hardware logic components that may be used include, but are not limited to, field-programmable gate arrays (FPGAs), application-specific integrated circuits (ASICs), application-specific standard products (ASSPs), system-on-a-chip (SoCs), complex programmable logic devices (CPLDs), and the like.

In the context of the present disclosure, a machine-readable medium may be a tangible medium that contains or stores a program for use by or in combination with an instruction execution system, apparatus, or device. A machine-readable medium may be a machine-readable signal medium or a machine-readable storage medium. Machine-readable media may include, but are not limited to, electronic, magnetic, optical, electromagnetic, infrared, or semiconductor systems, apparatuses, or devices, or any suitable combination thereof. More specific examples of machine-readable storage media would include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof.

According to one or more embodiments of the present disclosure, the present disclosure provides a method for processing virtual resources, comprising: in response to receiving a trigger operation from a first user, displaying a virtual resource display page; displaying, on the virtual resource display page, at least one resource identifier corresponding to at least one unclaimed virtual resource, the unclaimed virtual resource including a virtual resource generated based on the first user and a second user completing a preset interactive operation; and in response to receiving a trigger operation for the resource identifier, transferring the unclaimed virtual resource to the first user.

According to one or more embodiments of the present disclosure, the present disclosure provides a method for processing virtual resources, wherein the first user and the second user completing the preset interactive operation includes an interactive operation initiated by the first user to the second user and/or an interactive operation initiated by the second user to the first user.

According to one or more embodiments of the present disclosure, the present disclosure provides a method for processing virtual resources, wherein the interactive operation initiated by the first user to the second user includes an interactive operation initiated by the first user to the second user based on target media content post by the first user; and/or the interactive operation initiated by the second user to the first user includes at least one of: an interactive operation initiated by the second user to the first user based on target media content post by the first user, a virtual resource transfer operation initiated by the second user to the first user.

According to one or more embodiments of the present disclosure, the present disclosure provides a method for processing virtual resources, wherein the number of resource identifiers displayed on the virtual resource display page is determined by the categories of completed interactive operations; or the number of resource identifiers displayed on the virtual resource display page is determined by the number of completed interactive operations.

According to one or more embodiments of the present disclosure, the present disclosure provides a method for processing virtual resources, further comprising: displaying, on the virtual resource display page, a resource amount corresponding to the resource identifier and a category of interactive operation corresponding to the resource identifier.

According to one or more embodiments of the present disclosure, the present disclosure provides a method for processing virtual resources, further comprising: displaying a one-click claim control on the virtual resource display page; and in response to receiving a trigger operation for the one-click claim control, transferring all the unclaimed virtual resources to the first user.

According to one or more embodiments of the present disclosure, the present disclosure provides a method for processing virtual resources, further comprising: when the number of resource identifiers is greater than a preset number, controlling the movement and display of the resource identifiers on the virtual resource display page in response to a sliding operation on the virtual resource display page.

According to one or more embodiments of the present disclosure, the present disclosure provides a method for processing virtual resources, further comprising: displaying a first type of prompt information on the virtual resource display page, wherein the first type of prompt information is used to instruct the first user to perform a claim operation on the unclaimed virtual resources.

According to one or more embodiments of the present disclosure, the present disclosure provides a method for processing virtual resources, wherein, when the number of the first type of prompt information is plural, the display order of the first type of prompt information on the virtual resource display page is determined by the priority corresponding to the first type of prompt information.

According to one or more embodiments of the present disclosure, the present disclosure provides a method for processing virtual resources, further comprising: displaying a second type of prompt information on the virtual resource display page, wherein the second type of prompt information is used to indicate interactive operations that may be performed between the first user and the second user and the virtual resources obtained after completing the interactive operations.

According to one or more embodiments of the present disclosure, the present disclosure provides a method for processing virtual resources, further comprising: in response to receiving a trigger operation for the resource identifier, displaying a preset dynamic effect on the virtual resource display page.

According to one or more embodiments of the present disclosure, the present disclosure provides a method for processing virtual resources, further comprising: if a claim operation for the unclaimed virtual resource is not detected within a preset duration, controlling the resource identifier corresponding to the unclaimed virtual resource to no longer be displayed on the virtual resource display page.

According to one or more embodiments of the present disclosure, the present disclosure provides an apparatus for processing virtual resources, comprising: a virtual resource display page display module, configured to display a virtual resource display page in response to receiving a trigger operation from a first user; a resource identifier display module, configured to display, on the virtual resource display page, at least one resource identifier corresponding to at least one unclaimed virtual resource, the unclaimed virtual resource including a virtual resource generated based on the first user and a second user completing a preset interactive operation; and a virtual resource transfer module, configured to transfer the unclaimed virtual resource to the first user in response to receiving a trigger operation for the resource identifier.

According to one or more embodiments of the present disclosure, the present disclosure provides an apparatus for processing virtual resources, wherein the first user and the second user completing the preset interactive operation includes an interactive operation initiated by the first user to the second user and/or an interactive operation initiated by the second user to the first user.

According to one or more embodiments of the present disclosure, the present disclosure provides an apparatus for processing virtual resources, wherein the interactive operation initiated by the first user to the second user includes an interactive operation initiated by the first user to the second user based on target media content post by the first user; and/or the interactive operation initiated by the second user to the first user includes at least one of: an interactive operation initiated by the second user to the first user based on target media content post by the first user, a virtual resource transfer operation initiated by the second user to the first user.

According to one or more embodiments of the present disclosure, the present disclosure provides an apparatus for processing virtual resources, wherein the number of resource identifiers displayed on the virtual resource display page is determined by the categories of completed interactive operations; or the number of resource identifiers displayed on the virtual resource display page is determined by the number of completed interactive operations.

According to one or more embodiments of the present disclosure, the present disclosure provides an apparatus for processing virtual resources, wherein the resource identifier display module is further configured to display, on the virtual resource display page, the amount of resources and the category of interactive operations corresponding to the resource identifier.

According to one or more embodiments of the present disclosure, the present disclosure provides an apparatus for processing virtual resources, further comprising: a control display module, configured to display a one-click claim control on the virtual resource display page; and the virtual resource transfer module is further configured to, in response to a trigger operation for the one-click claim control, transfer all the unclaimed virtual resources to the first user.

According to one or more embodiments of the present disclosure, the present disclosure provides an apparatus for processing virtual resources, further comprising: a movement display module, configured to, when the number of resource identifiers exceeds a preset number, control the movement and display of the resource identifiers on the virtual resource display page in response to a sliding operation performed on the virtual resource display page.

According to one or more embodiments of the present disclosure, the present disclosure provides an apparatus for processing virtual resources, further comprising: a first type prompt information display module, configured to display a first type of prompt information on the virtual resource display page, wherein the first type of prompt information is used to instruct the first user to perform a claiming operation on the unclaimed virtual resources.

According to one or more embodiments of the present disclosure, the present disclosure provides an apparatus for processing virtual resources, wherein, when the quantity of the first type of prompt information is more than one, the display order of the first type of prompt information on the virtual resource display page is determined according to the priority corresponding to the first type of prompt information.

According to one or more embodiments of the present disclosure, the present disclosure provides an apparatus for processing virtual resources, further comprising: a second type prompt information display module, configured to display a second type of prompt information on the virtual resource display page, wherein the second type of prompt information is used to indicate the interactive operations which may be performed between the first user and the second user and the virtual resources obtained after completing said interactive operations.

According to one or more embodiments of the present disclosure, the present disclosure provides an apparatus for processing virtual resources, further comprising: a dynamic effect display module, configured to display a preset dynamic effect on the virtual resource display page in response to receiving a trigger operation for the resource identifier.

According to one or more embodiments of the present disclosure, the present disclosure provides an apparatus for processing virtual resources, wherein the resource identifier display module is further configured to, when a claiming operation on said unclaimed virtual resource is not detected within a preset duration, control corresponding resource identifier not to be displayed any more on said virtual resource display page.

According to one or more embodiments of the present disclosure, an electronic device is provided, comprising:
one or more processors;
a memory configured to store one or more programs;
wherein the one or more processors are configured to, when executing the one or more programs, cause the electronic device to perform the method for processing virtual resources according to any one of the described embodiments.

According to one or more embodiments of the present disclosure, the present disclosure provides an electronic device comprising: one or more processors; a memory configured to store one or more programs; wherein the one or more processors are configured to perform the method for processing virtual resources as described in any of the foregoing embodiments when executing the one or more programs.

According to one or more embodiments of the present disclosure, the present disclosure provides a computer-readable storage medium storing a computer program, the computer program, when executed by a processor, implementing the method for processing virtual resources as described in any of the foregoing embodiments.

The foregoing description is merely illustrative of the preferred embodiments of the present disclosure and the technical principles employed therein. Those skilled in the art will appreciate that the disclosed scope is not limited to the technical solutions formed by specific combinations of the technical features described above. The disclosed scope also covers other technical solutions formed by arbitrary combinations of the technical features described above or their equivalents, without departing from the inventive concept disclosed above. For example, a technical solution may be formed by substituting the technical features described above with technically equivalent features disclosed herein (but not limited to).

Moreover, while the operations are depicted in a specific order, this should not be understood as requiring that the operations be performed in the particular order shown or in a sequential order. In certain circumstances, multitasking and parallel processing may be advantageous. Similarly, while the foregoing discussion includes several specific implementation details, these details should not be construed as limitations on the scope of the disclosure. Certain features that are described in the context of separate embodiments may also be implemented in combination in a single embodiment. Conversely, various features that are described in the context of a single embodiment may also be implemented in multiple embodiments separately or in any suitable sub combination.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of processing virtual resource, for a first user side, comprising:
in response to receiving a trigger operation from a first user, displaying a virtual resource display page;
displaying, in the virtual resource display page, a resource identifier corresponding to at least one virtual resource to be taken, the virtual resource to be taken comprising a virtual resource generated based on the first user and a second user completing a preset interactive operation;
in response to receiving a trigger operation for the resource identifier, transferring the virtual resource to be taken to the first user.

2. The method of claim **1,** wherein the first user and the second user completing the preset interactive operation comprises an interactive operation initiated by the first user to the second user and/or an interactive operation initiated by the second user to the first user.

3. The method of claim 1, wherein the interactive operation initiated by the first user to the second user comprises an interactive operation initiated by the first user to the second user based on target media content posted by the first user, and/or
the interactive operation initiated by the second user to the first user comprises at least one of: an interactive operation initiated by the second user to the first user based on target media content posted by the first user, a virtual resource transfer operation initiated by the second user to the first user.

4. The method of claim 1, wherein the number of resource identifiers displayed in the virtual resource display page is determined by categories of completed interactive operations, or the number of resource identifiers displayed in the virtual resource display page is determined by the number of completed interactive operations.

5. The method of claim 1, further comprising:
displaying, in the virtual resource display page, a resource amount corresponding to the resource identifier and a category of interactive operation corresponding to the resource identifier.

6. The method of claim 1, further comprising:
displaying a one-click taking control in the virtual resource display page;
in response to receiving a trigger operation for the one-click taking control, transferring all the virtual resources to be taken to the first user.

7. The method of claim 1, further comprising:
in response to the number of resource identifiers being greater than a preset number, in response to a sliding operation on the virtual resource display page, controlling a mobile display of the resource identifiers in the virtual resource display page.

8. The method of claim 1, further comprising:
displaying a first type of prompt information in the virtual resource display page, wherein the first type of prompt information is used to indicate the first user to perform a taking operation on the virtual resources to be taken.

9. The method of claim 8, wherein in response to the number of the first type of prompt information being multiple, a display order of the first type of prompt information in the virtual resource display page is determined by priority corresponding to the first type of prompt information.

10. The method of claim 1, further comprising:
displaying a second type of prompt information in the virtual resource display page, wherein the second type of prompt information is used to indicate an interactive operation capable to be performed between the first user and the second user and virtual resources obtained after completing the interactive operation.

11. The method of claim 1, further comprising:
in response to receiving a trigger operation for the resource identifier, displaying a preset dynamic effect in the virtual resource display page.

12. The method of claim 1, further comprising:
in response to no taking operation for the virtual resource to be taken being detected within a preset duration, controlling the resource identifier corresponding to the virtual resource to be taken to no longer be displayed in the virtual resource display page.

13. An apparatus for processing virtual resources, configured at a first user side, comprising:
a virtual resource display page display module configured to display a virtual resource display page in response to receiving a trigger operation from a first user;
a resource identifier display module configured to display, in the virtual resource display page, at least one resource identifier corresponding to at least one virtual resource to be taken, the virtual resource to be taken comprising a virtual resource generated based on the first user and a second user completing a preset interactive operation;
a virtual resource transfer module configured to transfer the virtual resource to be taken to the first user in response to receiving a trigger operation for the resource identifier.

14. An electronic device, comprising:
one or more processors;
a storage device for storing one or more programs;
the one or more programs upon execution by the one or more processors, causing the one or more processors to implement a method in accordance with any of claims 1 to 12.

15. A computer-readable storage medium storing a computer program thereon, the computer program upon execution by a processor, causing the processor to implement the method of any of claims 1 to 12.

16. A computer program product comprising computer program or instructions, the computer program or instructions upon execution by a processor, causing the processor to implement the method of any of claims 1 to 12.
